# EUROPÄISCHE PATENTSCHRIFT

(11) **EP 1 029 743 B1**
(45) Veröffentlichungstag und Bekanntmachung des Hinweises auf die Patenterteilung: **22.04.2009**
(21) Anmeldenummer: 00101700.3
(22) Anmeldetag: 03.02.2000
(51) Int. Cl.: B60R 16/02

(54) **Modulare Zentralelektrik für Kraftfahrzeuge**
Vehicle modular electrical distribution centre
Centrale électrique modulaire pour véhicules à moteur

(30) Priorität: 18.02.1999 DE 19906784; 07.01.2000 DE 10000336
(43) Veröffentlichungstag der Anmeldung: 23.08.2000
(73) Patentinhaber: Continental Automotive GmbH, 30165 Hannover (DE)
(72) Erfinder: Berberich, Reinhold, 60439 Frankfurt/Main (DE); Fleischhauer, Norbert, 65760 Eschborn (DE)

(56) Entgegenhaltungen:
- EP-A- 0 901 211
- WO-A-99/61286
- US-A- 5 339 362
- US-A- 5 530 625
- US-A- 5 581 130
- US-A- 5 990 573

## Beschreibung

Die Erfindung betrifft eine modulare Zentralelektrik für Kraftfahrzeuge, bestehend aus einem elektrisch isolierenden Trägerkörper mit an der Außenwand der Trägerkörpers ausgebildeten Steckerplätzen zur Aufnahme einer elektrischen und einer elektromechanischen Funktionseinheit, welche untereinander sowie mit einem Kabelbaum und/oder einer elektronischen Funktionseinheit verbunden sind.

In einer Zentralelektrik sind die für einen bestimmten Fahrzeugausstattungsgrad benötigten Relais beziehungsweise Stecker und Sicherungen zusammengefaßt. Separate Kabelbäume führen von hier zu diversen Steuergeräten, Schaltern und Aktuatoren.

Eine derartige Zentralelektrik ist aus den EP 0 901 211 A gemäß der Oberbegriff des Anspruchs 1 bekannt.

Eine solche Zentralelektrik erfüllt im wesentlichen eine Verteilerfunktion, um die elektrischen Verbraucher des Kraftfahrzeugs, wie zum Beispiel Scheibenwi scher oder Blinker über elektrische Leitungen oder Kabelbäume mit elektrischer Spannung zu versorgen und die Funktionstüchtigkeit der Verbraucher zu überwachen. Die Ansteuerung der elektrischen Verbraucher erfolgt dabei über Relais, die auf der Oberseite der Zentralelektrik gemeinsam mit den Sicherungen der Verbraucherstromkreise steckbar angeordnet sind.

Aus der DE 42 27 182 C1 ist eine Zentralelektrik bekannt, bei welcher ein Grundkörper aus mehreren Teilträgerkörpern gebildet ist, wobei die Teilträgerkörper über ein Relais elektrisch miteinander verbunden werden. Dies hat den Nachteil, daß die Demontage der Zentralelektronik erst nach Entfernen von Steckern und Relais möglich. Darüber hinaus können die Stecker der Kabelbäume erst nach Einbau der Zentralelektronik einzeln kontaktiert beziehungsweise aufgesteckt werden.

Alle in Maximalausstattung eventuell benötigten Steckerlots (gegebenenfalls nebst Kontakten) müssen bei der Erstellung der Zentralelektrik vorgehalten werden. Varianten, die über den einmal festgelegten Umfang hinausgehen oder Änderungen von Einzelsteckplätzen sind nur durch Neudesign und Austausch des kompletten Relaisträgers zu realisieren, was nur mit einem hohen Aufwand möglich ist.

Der Erfindung liegt somit die Aufgabe zugrunde, eine Zentralelektrik anzugeben, welche ohne zusätzlichen Platzbedarf erweiterungsfähig beziehungsweise modifizierbar ist.

Erfindungsgemäß wird die Aufgabe dadurch gelöst, daß eine aus dem Trägerkörper herausgeführte elektrische Verbindung den Trägerkörper überragend ausgebildet ist, und ein aus einem Steckerkörper einer anzuschließenden Fahrzeugkomponente gebildetes Trägerkörpersegment mechanisch am Trägerkörper befestigt ist, wobei das Trägerkörpersegment und/oder die aufsetzbare Funktionseinheit elektrisch mit der elektrischen Verbindung verbunden ist.

Der Vorteil der Erfindung besteht darin, daß unter Beibehaltung eines einzigen Grundkörpers, der die Standardfahrzeugfunktionen bedient, eine bestimmte Anzahl an Ausstattungsvarianten aus einer beliebigen Menge von Möglichkeiten vorgehalten werden kann, ohne diese bis zur Fahrzeugeinführung bereits vollständig definieren zu müssen. Dabei ist es nicht notwendig den Bauraum für alle möglichen und sich zum Teil gegenseitig ausschließenden Varianten vorzuhalten.
Die Stecker der anzuschließenden Fahrzeugkomponenten sind so ausgestaltet, daß sie als Teilsegmente an den als Grundkörper dienenden Trägerkörper angebracht werden können, wodurch zusätzliche Steckerplätze für Zusatzelektroniken geschaffen werden.

In einer Ausgestaltung weist das Trägerkörpersegment an seiner Oberfläche Steckplätze für ein Relais und/oder eine Sicherung und/oder einen Gegenstekker für eine elektronische Funktionseinheit auf.

Bei einer Weiterbildung der Erfindung ist das Trägerkörpersegment aus dem Steckerkörper eines Kabelbaumsteckers gebildet

Die Steckerkörper bilden dabei eigenständige Teilsegmente, die beim Einbau mit dem Grundkörper verrasten und diesen Stück um Stück erweitern. Auf diesen flexibel erweiterbaren Baukasten können sowohl Einzelkomponenten wie Relais oder Sicherungen als auch komplette Steuergeräte (zum Beispiel eine Zentralelektronik) ohne zusätzliche Verkabelung einzeln und direkt aufgesteckt werden.

Vorteilhafterweise ist die elektrische Verbindung eine Versorgungsspannungsleitungen tragende Verteilerschiene, an welche alle zusätzlichen Trägerkörpersegmente elektrisch angeschlossen werden können. Mit Hilfe elektrischer, an dem Trägerkörpersegment angeordnete Mittel werden die an den Trägerkörpersegmenten angeschlossenen elektrischen, elektronischen und/oder elektromechanischen Funktionseinheiten einfach an der Verteilerschiene kontaktiert.

Vorteilhafterweise sind auf der Verteilerschiene neben den Leitungen für die Versorgungsspannung auch Busleitungen zur Vernetzung der Einzelkomponenten untereinander beziehungsweise der Einzelkomponenten mit externen Einrichtungen ausgebildet. Eine solche Schiene mit Versorgungs- und Kommunikationsleitungen dient nicht nur zur Vernetzung sondern auch zu einer weiteren Reduktion des Verkabelungsaufwandes.

Die Verteilerschiene ist besonders einfach herstellbar, wenn sie als Blech-Stanzteil ausgebildet ist.

In einer Ausgestaltung sind die Trägerkörpersegmente beidseitig an der Verteilerschiene kontaktierbar.

In einer Ausgestaltung überragt die Verteilerschiene den Trägerkörper mittig, wobei beidseitig zur Verteilerschiene Trägerkörpersegmente mechanisch am Trägerkörper befestigt sind, deren Kabelbäume mit verschiedenen externen elektrischen oder elektronischen Einrichtungen verbunden sind.

Vorteilhafterweise ist an dem ersten Trägerkörpersegment ein zweites Trägerkörpersegment befestigt, welches elektrisch mit der Verteilerschiene kontaktiert ist. Die Trägerkörpersegmente tragen sich dabei selbst.

Eine stabilere Anordnung wird erreicht, wenn am Trägerkörper ein Rahmen zur Aufnahme eines Trägerkörpersegmentes angeordnet ist, welcher die aus dem Trägerkörper herausgeführte Verteilerschiene umschließt. Der Rahmen bildet dabei ein frei belegbares Erweiterungsfeld für diverse Baugruppen.

Vorteilhafterweise sind der Trägerkörper und der Rahmen einteilig ausgebildet. Dies läßt sich in einem Kunststoffspritzgußverfahren einfach realisieren.

Die Stabilität kann weiter verbessert, wenn eine Funktionseinheit den Trägerkörper und ein Teilkörpersegment oder zwei Teilkörpersegmente übergreifend kontaktiert.

Die Erfindung läßt zahlreiche Ausführungen zu, eine davon soll anhand der in der Zeichnung dargestellten Figuren näher erläutert werden.

Es zeigt:
- Figur 1:: erste erfindungsgemäße Einrichtung
- Figur 2:: zweite erfindungsgemäße Einrichtung
- Figur 3:: Rasteinrichtungen

Gleiche Merkmale sind mit gleichen Bezugszeichen gekennzeichnet.

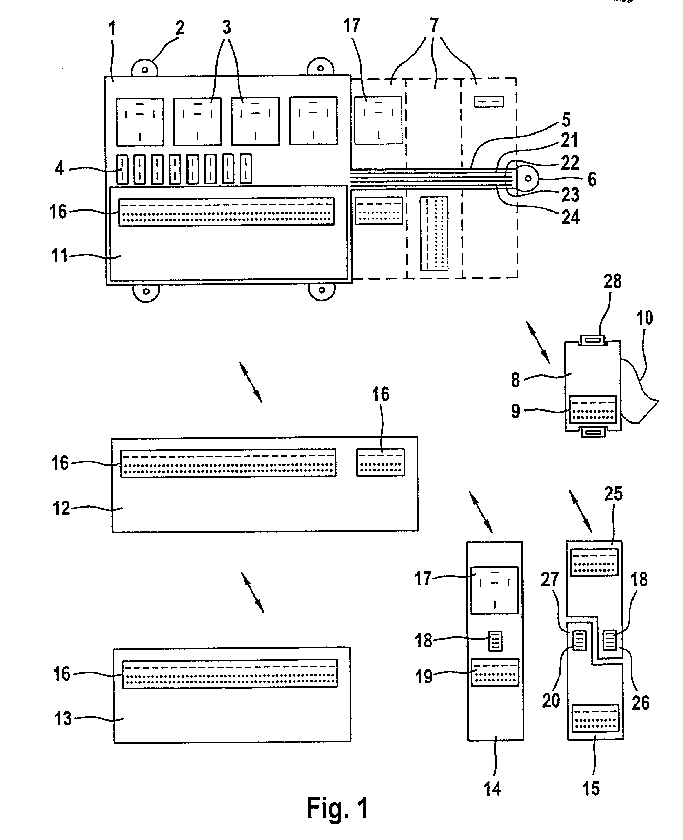

Diese Figur 1 zeigt eine modular aufgebaute Zentralelektrik mit einer Grundplatte 1 für Minimalfunktionen einer solchen Zentralelektrik, einer CAN-Bus- und Versorgungsspannungs-Verteilerschiene 5 sowie ein wahlfrei belegbares Erweiterungsfeld 7, gebildet aus entsprechend ausgestalteten Kabelbaumstekkerkörben diverser Funktionsbaugruppen.

Die aus Kunststoff bestehender Grundkörper 1 ist über Schraubverbindungen, von denen nur die Schraubenaufnahme 2 dargestellt ist, mit dem Kraftfahrzeug verbunden. In der Grundkörper 1 sind nicht weiter dargestellte Leiterbahnen angeordnet. Auf der Oberfläche der Grundkörper 1 sind Steckplätze 3 für Relais beziehungsweise Steckplätze 4 für Sicherungen ausgebildet. Aus der Grundkörper 1 ist die Verteiler-Schiene 5 herausgeführt, wobei die auf der Verteiler-Schiene 5 angeordneten Leitungen im Inneren des Grundkörpers 1 mit denen innerhalb des Grundkörpers 1 angeordneten Leiterbahnen verbunden sind.

Die auf der Verteiler-Schiene 5 angeordneten Leiterbahnen 21, 22, stellen die Verbindung zur Klemme 30 bzw. zur Klemme 31 des Kraftfahrzeuges dar. Darüber hinaus sind Kommunikationsleitungen 23 und 24 für den Kraftfahrzeug-Can-Bus (low und high) vorhanden. Die Verteiler-Schiene 5 wird an ihrem freien Ende 6 mit dem Kraftfahrzeug mechanisch verschraubt.

Das mögliche Erweiterungsfeld 7 für den Grundkörper 1 ist durch die gestrichelten Felder dargestellt. Beim vorliegenden Fall kann das Erweiterungsfeld 7 durch sechs Teilkörpersegmente 8 gebildet werden, wobei jedes Teilkörpersegment 8 aus einem Steckerkorb eines Kabelbaumes 10 gebildet ist. Der Steckerkorb 9 ist dabei so ausgebildet, daß sein Steckkontakte 10 aufweisender Steckerkörper eine Grundplatte bildet, welche beispielsweise mittels Rastclips 28, die an der Außenseite des Trägerkörpersegments 8 und an der diesem Körper 8 bei der Montage zugewandten Außenseite des Grundkörpers 1 angeordnet sind, mechanisch verbindbar sind.

Zur elektrischen Kontaktierung des Teilkörpersegmentes 8 mit der Verteiler-Schiene 5 weist das Teilkörpersegment 8 an der, der Verteiler-Schiene 5 zugewandten Seite eine nicht weiter dargestellte Kontaktiereinrichtung auf welche über die Verteiler-Schiene 5 geschoben wird und so die elektrische Verbindung des Kabelbaumsegmentes 8 mit der BUS-Schiene 5 herstellt.

Vorteilhafterweise können bei der vorliegenden Ausgestaltung mehrere solcher Kabelbaumsegmente 8 angeordnet werden, wobei die Verteiler-Schiene 5 mittig aus dem Grundkörper 1 herausragt, wodurch beidseitig zu der Verteiler-Schiene 5 jeweils drei Körper 8 angeordnet werden können.

Auf diesen so zusammengesetzten Körper, bestehend aus dem Grundkörper 1 und den Zusatzsegmenten 8, kann nun in beliebiger Art und Weise eine Zentralelektronik aufgesteckt werden. Die Zentralelektronik 11 umfaßt dabei beispielsweise solche Abmaße, daß sie nur den Grundkörper 1 überdeckt. In einer anderen Ausführung wird die in der Figur dargestellte Zentralelektronik 12 gleichzeitig in die Grundplatte 1 als auch in den an den Grundkörper 1 angrenzenden Teilkörpersegment 8 aufgesteckt. Die Zentralelektroniken 11, 12 und 13 weisen dabei Steckanschlüsse 16 auf, über welche sie Stelleinrichtungen, wie zum Beispiel Motor und Mechanik eines Scheibenwischers oder einer Sitzverstellung ansteuern.

Die aufsteckbaren Elemente 14, 15, 25 sind Beispiele für die Ausgestaltung einer Erweiterungselektronik, die ebenfalls auf die Teilsegmente 8 aufgesteckt werden. Eine Elektronikerweiterung ist möglich, indem auf einen oberhalb und einen unterhalb der Verteiler-Schiene 5 angeordneten Steckerkörpern 8 eine Zusatzelektronikeinheit 14 aufgesteckt wird, die einen Steckeranschluß für ein Relais 17, eine Kontakteinrichtung 18 sowie eine Steckeinrichtung 19 für die Verbindung mit einer nicht weiter dargestellten Steuereinheit aufweist. Das Erweiterungselement 14 wird dabei mit Hilfe der Kontakteinrichtung 18 von oben elektrisch mit der BUS-Schiene 5 kontaktiert.

An den Elemente 15 und 25 sind zur Kontaktierung mit der Bus-Schiene 5 Nasen 26, 27 ausgebildet, welche sich spiegelsymmetrisch zu einer senkrecht zur Verteiler - Schiene 5 gedachten Linie gegenüberliegen. In den Nasen 26, 27 ist jeweils eine Kontakteinrichtung 18 beziehungsweise 20 angeordnet, welche beim Befestigen der Erweiterungselektroniken 15 und 25 an den Teilkörpersegmenten 8 mit der BUS-Schiene 5 kontaktiert werden. Dabei erfolgt die elektrische Kontaktierung mit den Versorgungsleitungen 21 und 22 und den Kommunikationsleitungen 23 und 24 über starr ausgebildete Kontaktstifte.

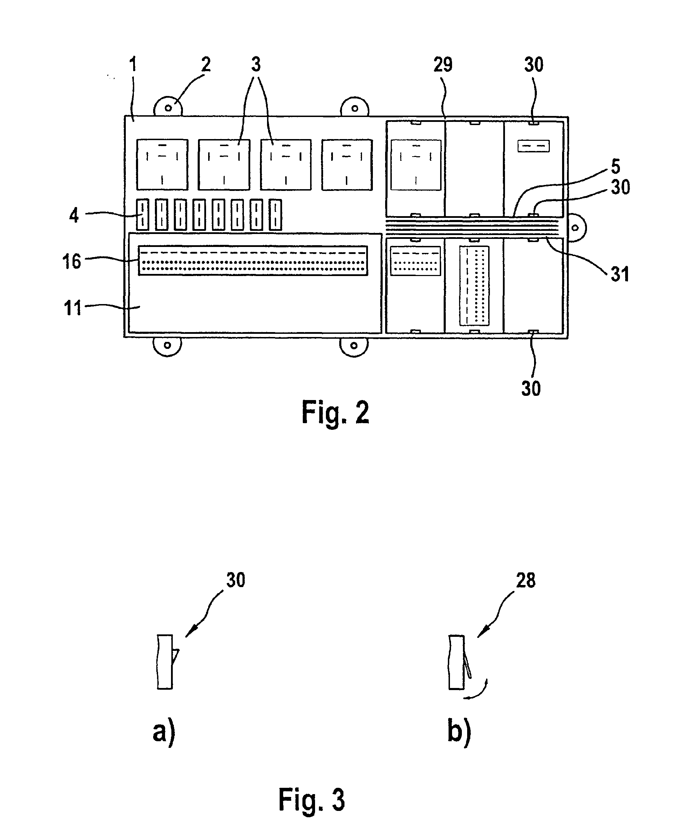

In Figur 2 ist eine weitere Ausführung der erfindungsgemäßen Zentralelektrik dargestellt. Dabei weist der Grundkörper 1 seitlich einen Rahmen 29 auf, dessen Abmaße einerseits der anliegenden Seite des Grundkörpers 1 entspricht und andererseits nur unwesentlich größer ist, als die Ausdehnung der sechs, in Figur 1 beschriebenen Teilkörpersegmente 8. Vorteilhafterweise sind der Grundkörper 1 und der Rahmen 29 einteilig aus Kunststoff hergestellt. Der Rahmen weist an seinen der Verteilerschiene 5 zugewandten Innenflächen Rastnasen 30 auf, in welche die Teilkörpersegmente 8 mit Hilfe der an ihnen befestigten Rastklipse 28 befestigt werden. (Figur 3). Ein Teil der Rastnasen 30 ist an einem Kunststoffsteg 31 befestigt, welcher die Verteiler-Schiene 5 trägt oder auf welchem die Versorgungsleitungen 21, 22 und die Kommunikationsleitungen 23, 24 direkt aufgebracht sind. Dabei können je nach Bedarf eine oder mehrere Teilkörpersegmente 8 am Rahmen befestigt werden.

## Patentansprüche

1. Modulare Zentralelektrik für Kraftfahrzeuge, bestehend aus einem elektrisch isolierenden Trägerkörper mit an der Außenwand des Trägerkörpers ausgebildeten Steckerplätzen zur Aufnahme einer elektrischen und/oder einer elektromechanischen Funktionseinheit, welche untereinander sowie mit einem Kabelbaum und/oder einer elektronischen Funktionseinheit verbunden sind wobei eine aus dem Trägerkörper (1) herausgeführte elektrische Verbindung (5) den Trägerkörper (1) überragend ausgebildet ist, **dadurch gekennzeichnet, daß** ein aus einem Steckerkörper einer anzuschließenden Fahrzeugkomponente (10) gebildetes, aus isolierendem Material bestehendes Trägerkörpersegment (8) mechanisch am Trägerkörper (1) befestigt ist, wobei das Trägerkörpersegment (8) und/oder die aufgesetzte Funktionseinheit ((14, 15, 25) elektrisch mit der elektrischen Verbindung (5) verbunden ist.

2. Zentralelektrik nach Anspruch 1, **dadurch gekennzeichnet, daß** das Trägerkörpersegment (8) an seiner Oberfläche Steckplätze (3) für ein Relais und/oder Steckplätze (4) für eine Sicherung aufweist.

3. Zentralelektrik nach Anspruch 1, **dadurch gekennzeichnet, daß** das Trägerkörpersegment (8) an seiner Oberfläche einen Gegenstecker (9) für eine elektronische Funktionseinheit aufweist.

4. Zentralelektrik nach Anspruch 1 **dadurch gekennzeichnet, daß** das Trägerkörpersegment (8) aus dem Steckerkörper eines Kabelbaumsteckers gebildet ist.

5. Zentralelektrik nach Anspruch 1 **dadurch gekennzeichnet, daß** die elektrische Verbindung eine Versorgungsspannungsleitungen (21, 22) tragende Verteilerschiene (5) ist.

6. Zentralelektrik nach Anspruch 5 **dadurch gekennzeichnet, daß** das Trägerkörpersegment (8) elektrische Mittel zur Kontaktierung der aufsteckbaren elektrischen, elektronischen und/oder elektromechanischen Funktionseinheiten (12, 12, 13, 14, 15, 25) an der Verteilerschiene (5) aufweist.

7. Zentralelektrik nach Anspruch 1, **dadurch gekennzeichnet, daß** die Verteilerschiene (5) neben Versorgungsspannungsleitungen (21, 22) Kommunikationsleitungen (23, 24) zur Vernetzung der Einzelkomponenten untereinander und mit externen Einrichtungen aufweist.

8. Zentralelektrik nach Anspruch 6, **dadurch gekennzeichnet, daß** die Verteilerschiene (5) als Stanzteil ausgebildet ist.

9. Zentralelektrik nach Anspruch 1 **dadurch gekennzeichnet, daß** die Trägerkörpersegmente (8) beidseitig an der Verteilerschiene (5) kontaktierbar sind.

10. Zentralelektrik nach einem der Ansprüche 1, 2 oder 3, **dadurch gekennzeichnet, daß** die Verteilerschiene (5) den Trägerkörper (1) mittig überragt, wobei beidseitig zur Verteilerschiene (5) Trägerkörpersegmente (8) mechanisch am Trägerkörper (1) befestigt sind, deren Kabelbaumkontakte (10) mit verschiedenen externen elektrischen oder elektronischen Einrichtungen verbunden sind.

11. Zentralelektrik nach Anspruch 1, 2 oder 3, **dadurch gekennzeichnet, daß** an dem ersten Trägerkörpersegment (8) ein zweites Trägerkörpersegment befestigt ist, welches elektrisch mit der Verteilerschiene (5) kontaktiert ist.

12. Zentralelektrik nach Anspruch 1 **dadurch gekennzeichnet, daß** am Trägerkörper (1) ein Rahmen (29) zur Aufnahme mindestens eines Trägerkörpersegmentes (8) angeordnet ist, welcher die aus dem Trägerkörper (1) herausgeführte Verteilerschiene (5) umschließt.

13. Zentralelektrik nach Anspruch 12 **dadurch gekennzeichnet, daß** der Trägerkörper (1) und der Rahmen (29) einteilig ausgebildet sind.

14. Zentralelektrik nach einem der vorhergehenden Ansprüche **dadurch gekennzeichnet, daß** eine Funktionseinheit (3,4,11,12,13,14, 15, 25) mindestens den Trägerkörper (1) und ein Teilkörpersegment (8) oder zwei Teilkörpersegmente (8) übergreifend kontaktiert.

## Claims

1. Modular central electrical unit for motor vehicles, comprising an electrically insulating base body having plug locations, which are formed on the outer wall of the base body, for accommodating an electrical and/or an electromechanical functional unit, which plug locations are connected to one another and to a cable harness and/or an electronic functional unit, **characterized in that** an electrical connection (5) which passes out of the base body (1) being designed such that it overhangs the base body (1), **characterized in that** a base body segment (8), which is formed from a plug body of a vehicle component (10) that is to be connected and is composed of insulating material, is mechanically attached to the base body (1), with the base body segment (8) and/or the fitted functional unit (14, 15, 25) being electrically connected to the electrical connection (5).

2. Central electrical unit according to Claim 1, **characterized in that**, on its surface, the base body segment (8) has plug-in locations (3) for a relay and/or plug-in locations (4) for a fuse.

3. Central electrical unit according to Claim 1, **characterized in that**, on its surface, the base body segment (8) has a mating connector (9) for an electronic functional unit.

4. Central electrical unit according to Claim 1, **characterized in that** the base body segment (8) is formed from the plug body of a cable-harness plug.

5. Central electrical unit according to Claim 1, **characterized in that** the electrical connection is a distribution rail (5) which is fitted with supply voltage lines (21, 22).

6. Central electrical unit according to Claim 5, **characterized in that** the base body segment (8) has electrical means for making contact between the plug-on, electrical, electronic and/or electromechanical functional units (12, 12, 13, 14, 15, 25) and the distribution rail (5).

7. Central electrical unit according to Claim 1, **characterized in that**, in addition to supply voltage lines (21, 22), the distribution rail (5) has communication lines (23, 24) for networking the individual components with one another and with external devices.

8. Central electrical unit according to Claim 6, **characterized in that** the distribution rail (5) is in the form of a stamping.

9. Central electrical unit according to Claim 1, **characterized in that** the base body segments (8) can be made contact with on both sides of the distribution rail (5).

10. Central electrical unit according to one of Claims 1, 2 or 3, **characterized in that** the distribution rail (5) overhangs the base body (1) centrally, with base body segments (8) being mechanically attached to the base body (1) on both sides of the distribution rail (5), and with the cable-harness contacts (10) of said base body segments (8) being connected to various external electrical or electronic devices.

11. Central electrical unit according to Claim 1, 2 or 3, **characterized in that** a second base body segment is attached to the first base body segment (8), and makes electrical contact with the distribution rail (5).

12. Central electrical unit according to Claim 1, **characterized in that** a frame (29) for accommodating at least one base body segment (8) is arranged on the base body (1) and encloses the distribution rail (5), which passes out of the base body (1).

13. Central electrical unit according to Claim 12, **characterized in that** the base body (1) and the frame (29) are designed integrally.

14. Central electrical unit according to one of the preceding claims, **characterized in that** a functional unit (3, 4, 11, 12, 13, 14, 15, 25) makes contact with at least the base body (1) and a partial body segment (8) or two partial body segments (8), engaging around them.

## Revendications

1. Module électrique centralisé pour véhicules automobiles, comprenant un corps porteur en isolant électrique avec des emplacements de connexion ménagés sur la paroi extérieure du corps porteur et destinés à recevoir une unité fonctionnelle électrique et/ou électromécanique, lesquelles unités fonctionnelles sont reliées entre elles, ainsi qu'à un faisceau de câbles et/ou à une unité fonctionnelle électronique, où une liaison électrique (5) sortant du corps porteur (1) fait saillie sur le corps porteur (1), **caractérisé par le fait qu'**un segment (8) du corps porteur, composé de matière isolante et formé par un corps de connecteur d'un constituant (10) du véhicule à raccorder, est fixé mécaniquement au corps porteur (1), où le segment (8) du corps porteur et/ou l'unité fonctionnelle (14, 15, 25) montée en relief sont raccordés électriquement par l'intermédiaire de la liaison électrique (5).

2. Module électrique centralisé selon la revendication 1, **caractérisé par le fait que** le segment (8) du corps porteur comporte, sur sa surface supérieure, des emplacements de connexion (3) pour un relais et / ou des emplacements de connexion (4) pour un fusible.

3. Module électrique centralisé selon la revendication 1, **caractérisé par le fait que** le segment (8) du corps porteur comporte, sur sa surface supérieure, une prise (9) pour une unité fonctionnelle électronique.

4. Module électrique centralisé selon la revendication 1, **caractérisé par le fait que** le segment (8) du corps porteur est formé par le corps d'un connecteur de faisceau de câbles.

5. Module électrique centralisé selon la revendication 1, **caractérisé par le fait que** la liaison électrique est une barre de répartition (5) portant des conducteurs (21, 22) de tension d'alimentation.

6. Module électrique centralisé selon la revendication 5, **caractérisé par le fait que** le segment (8) du corps porteur comporte des moyens électriques permettant de raccorder sur la barre de répartition (5) les unités fonctionnelles enfichables (11, 12, 13, 14, 15, 25) électriques, électroniques et/ou électromécaniques.

7. Module électrique centralisé selon la revendication 1, **caractérisé par le fait que** la barre de répartition (5) comporte, en plus de conducteurs (21, 22) de tension d'alimentation, des conducteurs de communication (23, 24) destinés à connecter les différents constituants les uns avec les autres et avec des dispositifs externes.

8. Module électrique centralisé selon la revendication 6, **caractérisé par le fait que** la barre de répartition (5) est conçue sous la forme de pièce découpée.

9. Module électrique centralisé selon la revendication 1, **caractérisé par le fait que** les segments (8) du corps porteur peuvent être raccordés des deux côtés sur la barre de répartition (5).

10. Module électrique centralisé selon l'une des revendications 1, 2 ou 3 **caractérisé par le fait que** la barre de répartition (5) fait saillie du corps porteur (1) en son milieu et, des deux côtés de la barre de répartition (5), des segments (8) du corps porteur sont fixés mécaniquement sur le corps porteur (1), dont les contacts (10) de faisceau de câbles sont reliés à divers dispositifs externes électriques ou électroniques.

11. Module électrique centralisé selon la revendication 1, 2 ou 3 **caractérisé par le fait que**, sur le premier segment (8) du corps porteur, est fixé un deuxième segment de corps porteur, lequel est en contact électrique avec la barre de répartition (5).

12. Module électrique centralisé selon la revendication 1, **caractérisé par le fait que**, sur le corps porteur (1), est placé un cadre (29) destiné à recevoir au moins un segment (8) de corps porteur, lequel entoure la barre de répartition (5) sortant du corps porteur (1).

13. Module électrique centralisé selon la revendication 12, **caractérisé par le fait que** le corps porteur (1) et le cadre (29) ne forment qu'une seule et unique pièce.

14. Module électrique centralisé selon l'une des revendications précédentes **caractérisé par le fait qu'**une unité fonctionnelle (3, 4, 11, 12, 13, 14, 15, 25) établit le contact au moins avec le corps porteur (1) et, globalement, un segment (8) de support partiel ou deux segments (8) de support partiel.
